# EUROPEAN PATENT APPLICATION

(11) **EP 1 385 080 A1**
(43) Date of publication of application: **28.01.2004**
(21) Application number: 02016647.6
(22) Date of filing: 25.07.2002
(51) Int. Cl.: G06F 1/32, G06F 1/26

(54) **Card reader and a network apparatus and corresponding power saving method**

(71) Applicant: AboCom Systems, Inc., Hsin-Chu, Taiwan (TW)
(72) Inventor: Oh-Yang, Eric, Miao-Lih Hsuan (TW); Chen, Jui-Chang, Hsin-Chu (TW); Chang, Chien-Kuo, Hsin-Chu (TW)
(74) Representative: Winkler, Andreas, Dr.

(57) **Abstract**

The present invention discloses a saving power architecture for card reader and network apparatus. The present invention includes PCMCIA interface and a main power source coupled thereto. A network power and a card reader power are respectively connected to the PCMCIA interface and the main power source for operating the card reader and network. Network apparatus is connected to the network power and the card reader is also connected to the card reader power for reading the information stored in the memory card. Associated software or driver is coupled to the PCMCIA interface for driving the network apparatus or card reader. A control unit is used to control the driver or the software.

## Description

### BACKGROUND OF THE INVENTION

### Field of the Invention

The present invention relates to a card reader and network apparatus, and more specifically, to a saving power mode and method of a sharing and switching power to a card reader or network apparatus.

### Description of the Prior Art

In recent years, many different kinds of cards have become more popular and have been widely used. Credit cards, bank cards, identification cards and many other cards are used in our increasingly complicated and rapidly changed society. More recently, a memory card or a smart card having an integrated circuit (IC) memory chip has been developed with increased capability of storing data, which can hold much more information than a magnetic strip type card. Use of the memory cards is rapidly increasing in the banking industry and for the purpose of storing personal data, such as electronic identification cards, driver's licenses, social security cards, financial cards and others.

To access the information stored on the memory card, the card reader should be equipped with a connector making an electrical connection with the contact elements of the semiconductor device, e.g. the IC chip.

The many readers that are in existence have the common feature of operation achieved by a microprocessor of their own that manages the sampling of an input/output line of the card and the associated transmission protocol. Furthermore, the microprocessor of the reader also provides for the interfacing with the microcomputer. Each reader therefore has a microprocessor whose design is developed to a greater or lesser extent and has a considerable effect on the cost of the reader.

The cards accepted by each reader and the protocols of transmission to the microcomputer are fixed in the microprocessor of the reader. This microprocessor finds out whether it can process the card presented to it and, together with the microcomputer, decides on the transmission protocol.

The connection of a card reader to the microcomputer is done by means of a connector or port on the microcomputer. This therefore necessitates a specific port for the card reader on each microcomputer. This is a drawback because it is useful, for reasons of cost or flexibility of use, to reduce the number of ports in the microcomputer.

The common method of reading memory cards by using card reader is to insert the memories into the connectors base of the card reader, then the card reader reads the stored data in memory cards by using the card reader connecting a computer. Especially, the card reader is located outside of the computer and separate with the computer. Therefore, we must carry a computer and a card reader simultaneously in reading the memory cards data. If the card reader does not carry, reading the memory cards will be cut off. It wastes much time for the card reader to connect the computer while read memory cards data.

For solving above problem, the present provides a architecture of an installed card reader and a network apparatus to overcome the prior skill drawback and to achieve a saving power effect by using a architecture of saving power of switching power. Therefore, we provide a new architecture and method to install a card reader and a network apparatus into a computer. Moreover, the card reader is actived by the processor of a computer.

### SUMMARY OF THE INVENTION

The main object of the present invention is to provide a saving power mode for easily switching a read reader and network apparatus.

The present invention provides a architecture of saving power of a card reader and network apparatus comprising a PCMCIA interface; a main power source, coupling to connect the PCMCIA interface. A local network power and a card reader power are connected to the PCMCIA interface respectively, and the main power source provides power to the local network power and the card reader power for operating the card reader and the local network. A local network apparatus is coupled to the local network power. A card reader is coupled to the card reader power to read inserted memory cards. A corresponding drive software is to support and drive the local network apparatus or the card reader by the PCMCIA interface. A control unit is to receive a command to control the drive software. The memory cards comprise SIM card, smart card, MMC or SD.

The present invention provides a method of saving power of a card reader and a network apparatus. The method comprises inserting a memory card into a card reader; detecting the inserting action to judge whether memory cards inserted into the card reader or inserted correctly into the card reader; if the determination is false, none of the memory card data read; reading data of the memory card, determining whether the read data is true, if the determination is false, terminating to access the data of the memory card; switching power to a local network apparatus waiting for command; if receiving the input command, determining whether the input command is the command written or read by the memory cards, if the determination is false, switching the power to the local network apparatus waiting for command; and if the determination is true, switching the power to the card reader for reading the data of the memory card.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein:
FIG. 1 is the schematic diagram of the present invention.
FIG.2 is the flow chart of a saving mode of the present invention.

### DESCRIPTION OF THE PREFERRED EMBODIMENT

The present invention discloses a architecture and method of a card reader and a network apparatus installed in a computer to achieve a saving power effect. Moreover, the present invention can provide a system of a read reader and network apparatus installed in a personal computer, and achieve easily a saving power effect by PCMCIA interface. Nevertheless, it should be noted that the present invention can be practiced in a wide range of other embodiments besides those explicitly described, and the scope of the present invention is expressly not limited except as specified in the accompanying claims.

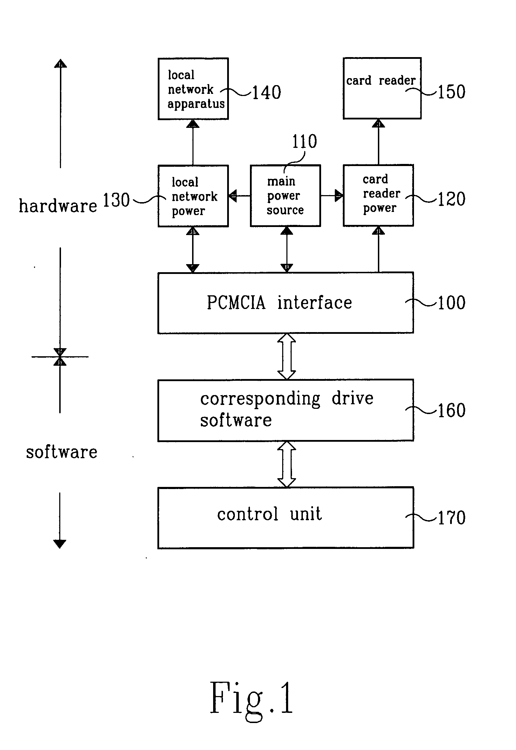

Referring to Fig. 1, this is the schematic diagram of the present invention. A main power source 110 is coupled to connect a PCMCIA interface 100, and the PCMCIA interface 100 may configure into a computer or connect to the computer. The personal computer comprises a desk-top or notebook computer, and the computer contains main frame and monitor. A local network power 130 and a card reader power 120 are connected to the PCMCIA interface 100 respectively. The main power source 110 provides power to the local network power 130 and the card reader power 120 for operating the card reader and the local network. The memory cards comprise SIM card, smart card, MMC or SD. A local network apparatus and a card reader 150 are coupled to the local network power 130 and the card reader power 120 respectively. A corresponding drive software 160 may support and drive the local network apparatus 140 or the card reader 150 by the PCMCIA interface 100. The control unit 170 is accepted command to control the corresponding drive software 160.

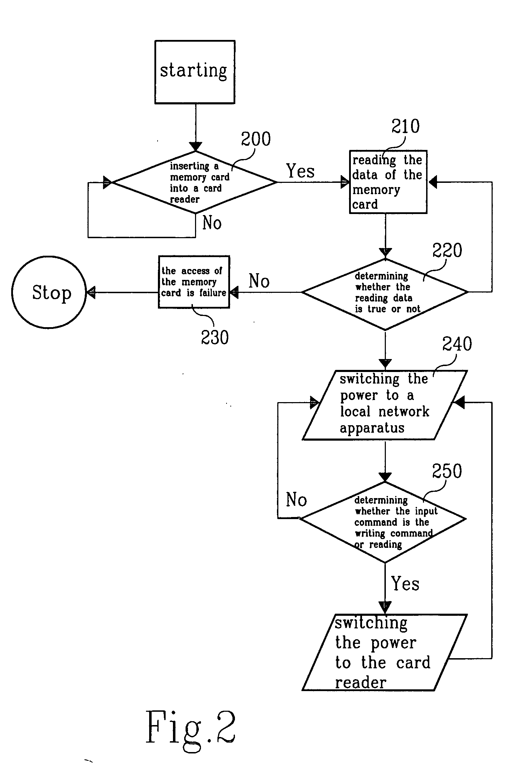

FIG.2 is the flow chart of the present invention. Firstly, in the step 200, user inserts a memory card into a card reader, and then the system of the present invention will detect the inserting action to judge whether the memory card inserted into the card reader or inserted correctly into the card reader. If the judgment is false, the system will not read the memory card data. So, it must insert correctly.

In the step 210, the data of the memory card is read. The next step 220 is to determine whether the reading data is true or not. If the determination is false, the access of the memory card is failure 230 and thereby terminates to access the memory card data. In the step 240, the power is then switched to a local network apparatus waiting for command. If an input command is received, proceeding the step 250, it determines whether the input command is the writing command or reading. If the determination is false, the power is switched to the local network apparatus and waiting for next command. If the determining is true, that is, the input command is the command of accessing the memory card data, the power is switched to the card reader by a PCMCIA interface for reading the data of the memory card.

Therefore, the advantage of the present invention is that the present can provide a power switch of an installed card reader and a waiting mode so that the user uses the architecture or system does not need to connect to the card reader. It is very convenient for the user. Moreover, using the method of the present invention can easily achieve a saving power effect, and switch a read reader and network apparatus by PCMCIA interface.

As is understood by a person skilled in the art, the foregoing preferred embodiments of the present invention are illustrated of the present invention rather than limiting of the present invention. It is intended to cover various modifications and similar arrangements included within the spirit and scope of the appended claims, the scope of which should be accorded the broadest interpretation so as to encompass all such modifications and similar architecture. Thus, while the preferred embodiment of the invention has been illustrated and described, it will be appreciated that various changes can be made therein without departing from the spirit and scope of the invention.

The features disclosed in the foregoing description, in the claims and/or in the accompanying drawing may, both separately and in any combination thereof, be material for realising the invention in diverse forms thereof.

## Claims

1. An architecture of saving power of a card reader and a network apparatus comprising:
a PCMCIA interface;
a main power source coupled to connect said PCMCIA interface;
a local network power and a card reader power, said local network power and said card reader power connected to said PCMCIA interface respectively, and said main power source providing power to said local network power and said card reader power for operating said card reader and said local network;
a local network apparatus coupled to said local network power;
a card reader coupled to said card reader power to read inserted memory cards;
a corresponding drive software, supporting and driving said local network apparatus or said card reader by said PCMCIA interface; and
a control unit received command to control said drive software.

2. The architecture of saving power of a card reader and a network apparatus of claim 1, wherein said memory cards comprise SIM card, smart card, MMC or SD.

3. A method of saving power of a card reader and a network apparatus comprising:
inserting a memory card into a card reader;
detecting said inserting action, determining whether said memory card inserted into said card reader or correctly inserted into said card reader, if said determination is false, none of said memory card data being read;
reading said data of said memory card, determining when said read data is true, if said determination is false, then terminating to access said data of said memory card;
switching power to a local network apparatus waiting for command;
if receiving next input command, determining whether said input command is reading command or reading command for said memory cards, if said determination is false, switching said power to said local network apparatus and waiting for further command; and
if said determination is true, switching said power to said card reader for reading said data of said memory card.
